# EUROPÄISCHE PATENTANMELDUNG

(11) **EP 1 118 410 A2**
(43) Veröffentlichungstag der Anmeldung: **25.07.2001**
(21) Anmeldenummer: 01100352.2
(22) Anmeldetag: 05.01.2001
(51) Int. Cl.: B23D 37/10

(54) **Räummaschine**

(30) Priorität: 18.01.2000 DE 10001758
(71) Anmelder: Oswald Forst Maschinenfabrik und Apparatebauanstalt GmbH & Co Kommanditgesellschaft, 42659 Solingen (DE)
(72) Erfinder: Die Erfindernennung liegt noch nicht vor
(74) Vertreter: Rau, Manfred, Dr. Dipl.-Ing.

(57) **Zusammenfassung**

Eine Räummaschine weist mindestens eine Werkstück-Aufnahme (23) und eine Einrichtung zur Bewegung der Werkstück-Aufnahme (23) und eines Räumwerkzeugs (22) relativ zueinander in Richtung von dessen Achse (30) auf. Es ist eine Vorrichtung (27) zum Entfernen von Spänen vom Räumwerkzeug (22) vorgesehen, die mindestens eine um eine Achse (29) frei drehbar gelagerte, mit ihren Borsten in die Spankammern des Räumwerkzeugs (22) eingreifende Bürste aufweist. Die Bürste wird durch die Bewegung der Werkstück-Aufnahme (23) des Räumwerkzeugs (22) relativ zueinander in Richtung der Achse (30) und/oder durch Drehbewegungen des Räumwerkzeugs (22) angetrieben.

## Beschreibung

Die Erfindung betrifft eine Räummaschine, und zwar insbesondere eine Senkrecht-Innen-Räummaschine.

Ein grundsätzliches Problem bei Räummaschinen ist die Entfernung der Späne von den Schneidzähnen des Räumwerkzeugs. Die klassische Methode besteht darin, mit einem hohen Einsatz an Kühlmittel die Späne vom Räumwerkzeug zu spülen. Das Kühlmittel wird anschließend von den Spänen befreit und im Kreislauf wieder eingesetzt. Einzelheiten hierzu und auch vom betrieblich unbefriedigenden Einsatz von Bürsten sind aus der Veröffentlichung von H. Zeile "Bericht vom Kolloquium Räumen in Karlsruhe" in der VDI-Zeitschrift 121 (1979), Nr. 18, S. 900, rechte Spalte, bekannt geworden.

Aus der DE 198 06 843 C1 ist es bekannt geworden, Rollen gegen das Räumwerkzeug zu drücken, die die an den Schneidzähnen haftenden Späne lockern, so daß diese anschließend mittels Kühlflüssigkeit abgespült werden können.

Der Erfindung liegt die Aufgabe zugrunde, eine Räummaschine so auszugestalten, daß mit einfachen Mitteln ein zuverlässiges Entfernen von Spänen vom Räumwerkzeug erreicht wird.

Diese Aufgabe wird erfindungsgemäß durch die Merkmale des Anspruches 1 erreicht. Durch die erfindungsgemäßen Maßnahmen wird sichergestellt, daß die Bürsten auch die Spankammern gleichsam auskehren, also die Späne aus den Spankammern entfernen. Dadurch, daß die Bürsten nur von dem Räumwerkzeug selber angetrieben werden, ergibt sich eine geringe Relativbewegung zwischen Bürste und Räumwerkzeug nur aus der Elastizität der Borsten, so daß das Entfernen der Späne bei sehr geringem Verschleiß der Bürsten erfolgt. Es ist kein erheblicher Spülaufwand erforderlich, so daß auch eine sogenannte Minimalmengenschmierung des Räumwerkzeugs möglich ist. Ausgedehnte Versuche haben dieses überraschende Ergebnis bestätigt.

Zahlreiche vorteilhafte und zum Teil erfinderische Ausgestaltungen ergeben sich aus den Unteransprüchen.

Weitere Merkmale, Einzelheiten und Vorteile der Erfindung ergeben sich aus der nachfolgenden Beschreibung von Ausführungsbeispielen anhand der Zeichnungen. Es zeigt:
- Fig. 1: eine Vorderansicht einer Senkrecht-Innen-Räummaschine mit einer ersten Vorrichtung zum Entfernen von Spänen,
- Fig. 2: eine Seitenansicht der Räummaschine nach Fig. 1 mit einer zweiten Ausführungsform einer Vorrichtung zum Entfernen von Spänen,
- Fig. 3: eine Teilansicht der ersten Ausführungsform einer Vorrichtung zum Entfernen von Spänen in gegenüber Fig. 1 vergrößerter schematischer Darstellung in Vorderansicht,
- Fig. 4: eine Draufsicht auf die Vorrichtung gemäß Fig. 3,
- Fig. 5: eine Teilansicht der zweiten Ausführungsform der Vorrichtung zum Entfernen von Spänen in gegenüber Fig. 2 vergrößerter schematischer Darstellung,
- Fig. 6: eine Draufsicht auf die Vorrichtung nach Fig. 5,
- Fig. 7: die Vorrichtung nach Fig. 5 in leicht abgewandelter Ausführung,
- Fig. 8: eine Seitenansicht der Räummaschine nach Fig. 1 mit einer dritten Ausführungsform einer Vorrichtung zum Entfernen von Spänen,

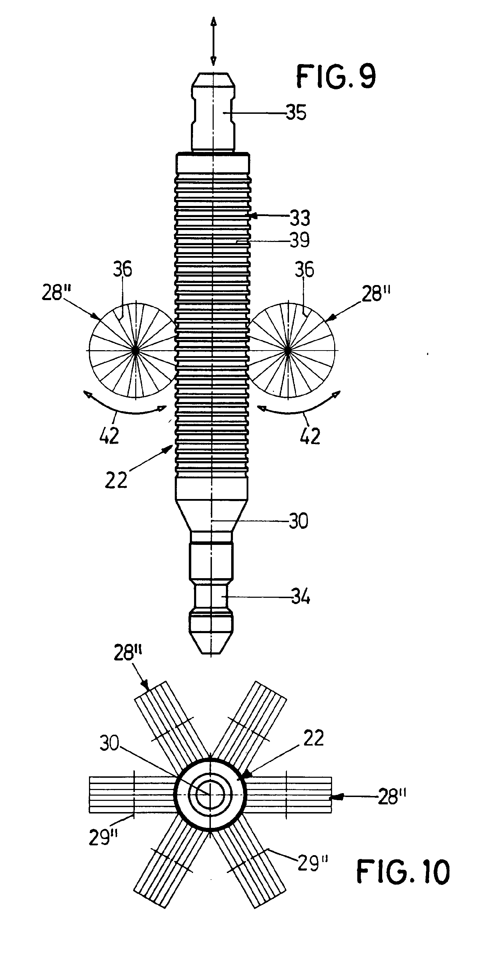

- Fig. 9: eine Teilansicht der dritten Ausführungsform einer Vorrichtung zum Entfernen von Spänen in gegenüber Fig. 8 vergrößerter schematischer Darstellung in Vorderansicht und
- Fig. 10: eine Draufsicht auf die Vorrichtung nach Fig. 8.

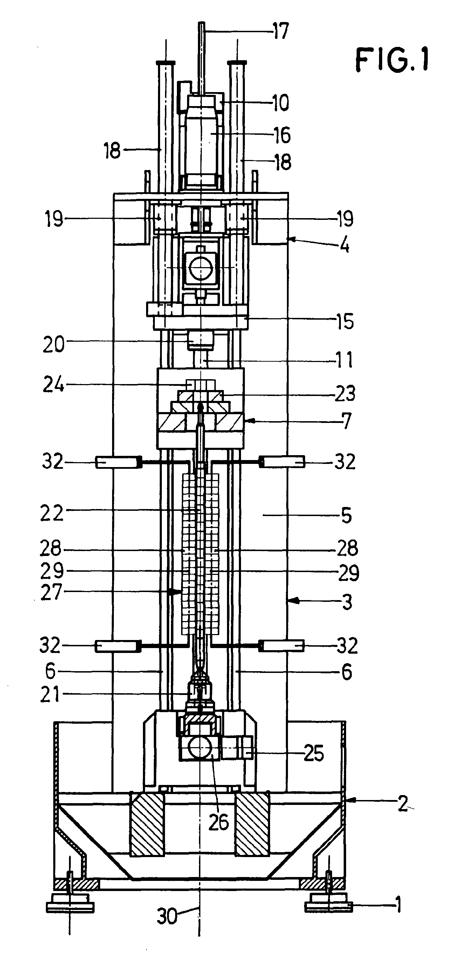

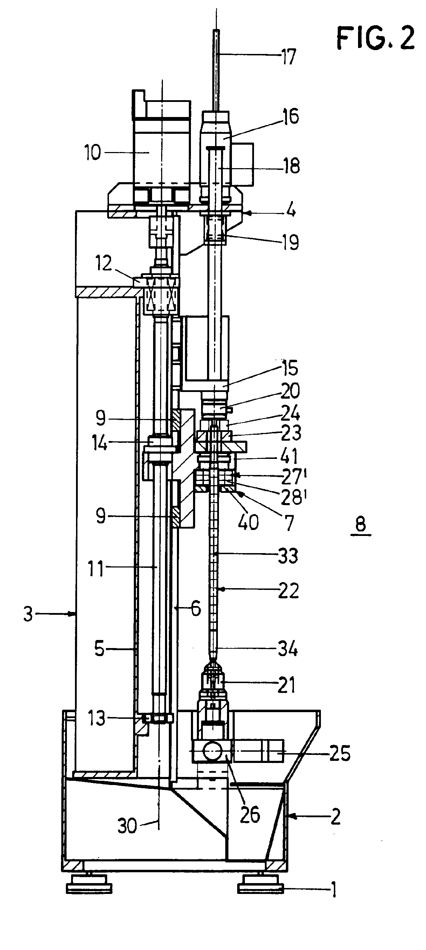

Der Grundaufbau einer Räummaschine wird anhand der Fig. 1 und 2 erläutert. Die in der Zeichnung dargestellte Senkrecht-Innen-Räummaschine, bei der es sich in diesem Fall um eine Druck-Räummaschine handelt, weist ein über Füße 1 auf einem Fundament abgestütztes Untergestell 2 auf, auf dem ein Ständer 3 angebracht ist, der nach oben über eine Kopf-Traverse 4 abgeschlossen wird. Die Traverse 4 ragt über die Vorderseite 5 des Ständers 3 nach vorn. An der Vorderseite 5 des Ständers 3 sind zwei parallel zueinander und vertikal verlaufende als Führungsschienen ausgebildete Führungen 6 angebracht, an denen ein als Räumschlitten dienender Werkstück-Hebetisch 7 vertikal verschiebbar geführt ist. Wie aus Fig. 2 hervorgeht, ist der Hebetisch 7 - von der Bedienungsseite 8 her gesehen - vollständig vor der Vorderseite 5 des Ständers 3 angeordnet und ist mit Schiebelagern 9 auf den Führungen 6 verschiebbar gelagert.

Auf der Traverse 4 ist ein Hub-Antriebsmotor 10 angebracht, der eine vertikal angeordnete Hub-Antriebsspindel 11 antreibt. Die Antriebsspindel 11 ist in ihrer Längsrichtung unverschiebbar, aber drehbar in Lagern 12, 13 gelagert, von denen das obere Lager 12 unmittelbar unterhalb des Antriebsmotors 10 am oberen Ende der Vorderseite 5 des Ständers 3 und das untere Lager 13 unterhalb des Hebetisches 7 am Ständer 3 angebracht ist, wie beispielsweise aus Fig. 2 hervorgeht. Auf der der Vorderseite 5 des Ständers 3 zugewandten rückwärtigen Seite des Hebetisches 7 ist eine Hub-Spindelmutter 14 angebracht, die von der Antriebsspindel 11 durchsetzt wird. Bei einem Drehantrieb der Hub-Antriebsspindel 11 wird demzufolge der Hebetisch 7 nach oben oder unten verfahren.

Oberhalb des Hebetisches 7 und unterhalb der Traverse 4 ist auf den Führungen 6 ein Räumwerkzeug-Zubringerschlitten 15 vertikal verschiebbar gelagert, und zwar in gleicher Weise wie der Hebetisch 7. Auf der Traverse 4 ist ein Zubringerschlitten-Antriebsmotor 16 angebracht, der über eine Spindel 17 mit dem Zubringerschlitten 15 gekoppelt ist und hierüber dessen Zustellbewegungen ausübt. Am Zubringerschlitten 15 sind zwei sich nach oben durch die Traverse 4 hindurch erstreckende Druckstangen 18 in ihrer Längsrichtung fest angebracht, die jeweils eine Klemmeinrichtung 19 durchsetzen, die ebenfalls an der Traverse 4 angebracht sind. An dem Zubringerschlitten 15 ist ein oberer Räumwerkzeug-Halter 20 angebracht, bei dem es sich üblicherweise um einen sogenannten Endstück-Halter handelt.

Unterhalb des Hebetisches 7 ist ein unterer Räumwerkzeug-Halter 21, bei dem es sich üblicherweise um einen sogenannten Schaft-Halter handelt, angeordnet, der am Untergestell 2 befestigt ist. Die beiden Halter 20, 21 dienen zur Aufnahme eines Räumwerkzeuges 22. Auf dem Hebetisch 7 ist eine Werkstück-Aufnahme 23 angebracht, in die ein Werkstück 24 zum Räumen eingelegt werden kann. Weitere Einzelheiten und insbesondere die Arbeitsweise der Räummaschine sind bekannt, beispielsweise aus der DE 199 24 517 A, worauf verwiesen wird.

Am Untergestell 2 ist ein Räumwerkzeug-Drehantrieb 25 angebracht, mittels dessen der untere Räumwerkzeug-Halter 21 über ein Winkel-Getriebe 26 drehantreibbar ist.

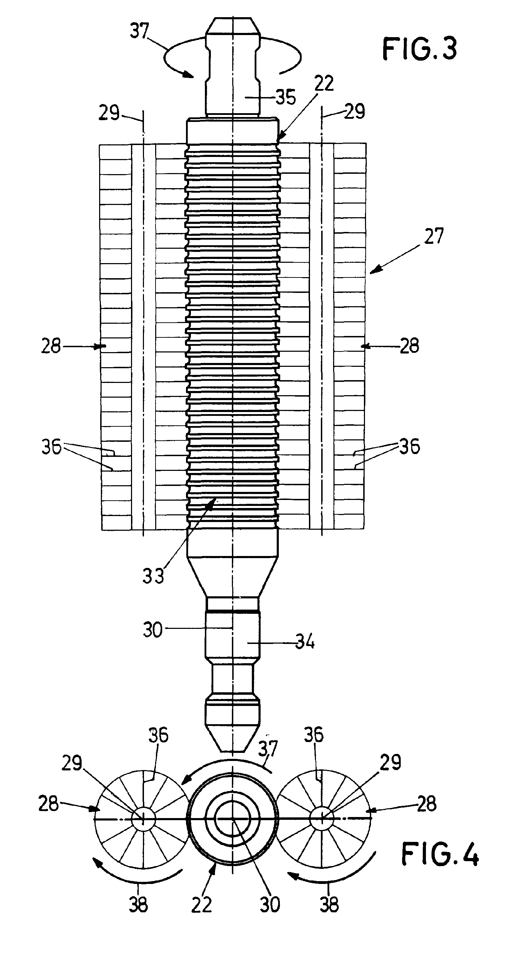

Die Räummaschinen sind mit einer Vorrichtung 27 zum Entfernen von Spänen vom Räumwerkzeug 22 versehen. Bei der Ausführungsform nach Fig. 1 weist diese Vorrichtung 27 zwei Bürsten 28 auf, die um vertikale Achsen 29 frei drehbar gelagert sind. Die Achsen 29 verlaufen also parallel zur Achse 30 des Räumwerkzeugs 22. Wie aus Fig. 4 hervorgeht, liegen die Achsen 29, 30 in einer gemeinsamen Ebene. Die Bürsten 28 sind an Haltearmen 31 drehbar gelagert, die mittels als pneumatisch beaufschlagbare Kolben-Zylinder-Antriebe ausgebildeten Zustell-Antrieben 32 zum Räumwerkzeug 22 hin bzw. von diesem weg verstellbar sind. Hierdurch sind die Bürsten 28 in eine in Fig. 1 und 3 gezeigte Arbeitsstellung zustellbar, in der sie am Räumwerkzeug 22, und zwar über die volle Länge von dessen Zahnungsteil 33 elastisch nachgiebig anliegen. In ihrer in der Zeichnung nicht dargestellten Ruhestellung befinden sich die Bürsten 28 außerhalb des senkrechten Verfahrweges des Hebetisches 7. Nach Beendigung eines Räumvorganges befindet sich der Hebetisch 7 mit dem geräumten Werkstück 24 in der in der Zeichnung dargestellten oberen Position. Das untere Ende 34, der Schaft, des Räumwerkzeuges 22 ist noch im unteren Räumwerkzeug-Halter 21 eingespannt. Das obere Ende 35, das Endstück, des Räumwerkzeuges 22 ist vom oberen Räumwerkzeug-Halter 20 gelöst. Der Zubringerschlitten 15 ist in seiner obere Lage bis direkt unter die Traverse 4 verfahren. Die Bürsten 28 sind durch entsprechende Betätigung der Zustell-Antriebe 32 in den Fig. 1 und 3 dargestellte Arbeitsposition verfahren, in der die Borsten 36 der Bürsten 28 dicht am Zahnungsteil 33 anliegen. Nunmehr wird der Drehantrieb 25 betätigt, daß das Räumwerkzeug 22 um seine Achse 30 gedreht wird. Hierbei werden die Bürsten 28 entsprechend der Drehrichtung 37 der Bürsten 28 mitgenommen und drehen sich in Drehrichtung 38. Die freien Enden der Borsten 36 üben hierbei eine Relativbewegung gegenüber dem Räumwerkzeug 22 aus und greifen in die Spankammern 39 ein, so daß sie die am Räumwerkzeug 22, und zwar die an den Schneidzähnen 39a und insbesondere auch die in den Spankammern 39 befindlichen Späne vom Räumwerkzeug entfernen.

Bei der Räummaschine nach Fig. 2 weist die Vorrichtung 27' zur Entfernung von Spänen zwei Bürsten 28' auf, deren Achsen 29' ebenfalls parallel zur Achse 30 des Räumwerkzeugs 22 und in einer Ebene hiermit liegen. Die beiden Bürsten 28' haben nur eine geringe axiale Erstreckung und sind in jeweils einer Halterung 40 frei drehbar gelagert, die an der Unterseite des Hebetisches 7 angebracht sind. Sie werden mittels Blattfedern 41 elastisch leicht gegen das Räumwerkzeug 22 angedrückt. Anstelle der Blattfedern können auch andere mechanische oder pneumatische Federn eingesetzt werden.

Nach Beendigung eines Räumvorganges befindet sich der Hebetisch 7 mit den Bürsten 28' in seiner oberen Lage. Das obere Ende 35 des Räumwerkzeugs 22 ist aus dem oberen Räumwerkzeug-Halter 20 gelöst. Der Zubringerschlitten 15 befindet sich in seiner vollständig hochgefahrenen Position. Der Drehantrieb 25 wird in Betrieb gesetzt, so daß das Räumwerkzeug um seine Achse 30 gedreht wird. Nunmehr wird der Hebetisch 7 nach unten verfahren. Aufgrund der Drehung des Räumwerkzeugs 22 um die Achse 30 in Drehrichtung 37 werden die Bürsten 28' in Drehrichtung 38 gedreht. Es tritt der gleiche Reinigungseffekt wie bei dem zuvor geschilderten Ausführungsbeispiel ein. Die sich drehenden Bürsten 28' werden von oben nach unten am Zahnungsteil 33 des Räumwerkzeugs 22 entlang geführt, so daß der gesamte Zahnungsteil 33 von Spänen befreit wird.

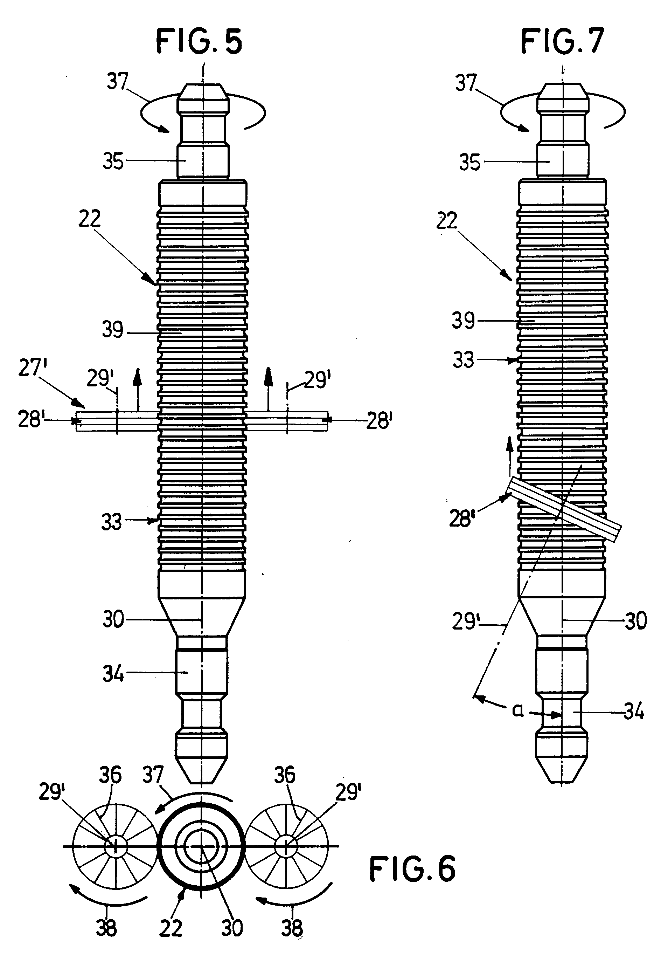

Wie Fig. 7 entnehmbar ist, können die Bürsten 28' auch schräg angestellt sein, so daß die Achsen 29' der Bürsten 28' und die Achse 30 des Räumwerkzeugs 22 nicht mehr parallel zueinander verlaufen, sondern unter einem Winkel a, der naturgemäß kleiner 45° und in der Regel kleiner 30° sein wird.

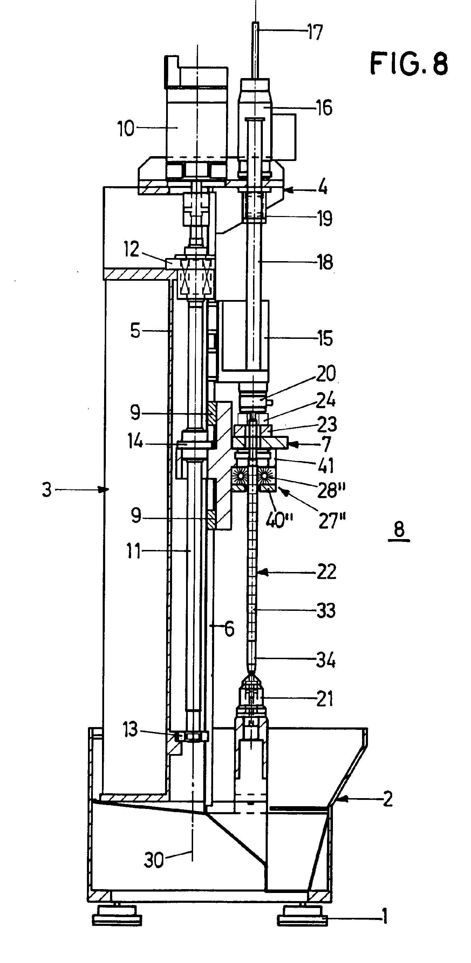

Die Räummaschine nach Fig. 8 unterscheidet sich von denen nach den Fig. 1 und 2 dadurch, daß der untere Räumwerkzeug-Halter 21 nicht mittels eines Drehantriebs antreibbar ist. Die Vorrichtung 27" zum Entfernen von Spänen vom Räumwerkzeug 22 ist - wie bei der Räummaschine nach Fig. 2 - an der Unterseite des Hebetisches 7 angebracht. Sie weist mehrere - im vorliegenden Fall sechs - Bürsten 28" auf, die jeweils in einer Halterung 40" um horizontale Achsen 29" frei drehbar gelagert sind. Die Halterungen 40" werden mittels Blattfedern 41" oder anderen mechanischen oder pneumatischen Federn elastisch in Richtung auf das Räumwerkzeug 22 gedrückt. Die Bürsten 28" liegen mit ihrem Umfang am Räumwerkzeug 22 an und zwar derart, daß der gesamte Umfang des Räumwerkzeugs 22 von den Borsten 36 abgedeckt wird.

Bei den Relativbewegungen zwischen Hebetisch 7 und Räumwerkzeug 22 in Richtung der Achse 30, und zwar sowohl beim Räumvorgang als auch beim nachfolgenden Leerhub des Hebetisches 7 rollen die Bürsten 28" am Zahnungsteil 33 in beiden möglichen Drehrichtungen 42 ab und reinigen den Zahnungsteil 33 von Spänen.

## Patentansprüche

1. Räummaschine
- mit mindestens einem eine Achse (30) und einen Zahnungsteil (33) mit Schneidzähnen (39a) und Spankammern (39) aufweisenden Räumwerkzeug (22),
- mit mindestens einer Werkstück-Aufnahme (23),
- mit einer Einrichtung zur Bewegung der Werkstück-Aufnahme (23) und des Räumwerkzeugs (22) relativ zueinander in Richtung der Achse (30) und
- mit einer Vorrichtung (27, 27', 27") zum Entfernen von Spänen vom Räumwerkzeug (22),
-- die mindestens eine um eine Achse (29, 29', 29") frei drehbar gelagerte, mit ihren Borsten (36) in die Spankammern (39) eingreifende, durch Bewegung der Werkstück-Aufnahme (23) und des Räumwerkzeugs (22) relativ zueinander in Richtung der Achse (30) und/oder durch Drehbewegungen des Räumwerkzeugs (22) antreibbar ist.

2. Räummaschine nach Anspruch 1, **dadurch gekennzeichnet,**
**daß** das mindestens eine Räumwerkzeug (22) drehantreibbar ist.

3. Räummaschine nach Anspruch 1 oder 2, **dadurch gekennzeichnet,**
**daß** die Achse (29, 29') der mindestens einen Bürste (28, 28') im wesentlichen parallel zu der Achse (30) des mindestens einen Räumwerkzeugs (22) verläuft.

4. Räummaschine nach Anspruch 2, **dadurch gekennzeichnet,**
**daß** die Bürste (28) sich über die volle Länge des Zahnungsteils (33) erstreckt.

5. Räummaschine nach Anspruch 2 und 3, **dadurch gekennzeichnet,**
**daß** die Bürste (28') sich nur über einen Teil der Länge des Zahnungsteils (33) erstreckt und durch die Drehbewegung des Räumwerkzeugs (22) und durch die Bewegung des Räumwerkzeugs (22) und der Werkstück-Aufnahme (23) relativ zueinander in Richtung der Achse (30) antreibbar ist.

6. Räummaschine nach Anspruch 2, **dadurch gekennzeichnet,**
**daß** die Bürste (28') sich nur über ein Teil der Länge des Zahnungsteils (33) erstreckt und daß ihre Achse (29') gegenüber der Achse (30) des Räumwerkzeugs (22) um weniger als 45° geneigt ist und daß die Bürste (28') durch die Bewegung des Räumwerkzeugs (22) und der Werkstück-Aufnahme (23) relativ zueinander (30) und durch die Drehbewegung des Räumwerkzeugs (22) antreibbar ist.

7. Räummaschine nach einem der Ansprüche 1 bis 6, **dadurch gekennzeichnet,**
**daß** an jedem Räumwerkzeug (22) zwei relativ zur Achse (30) des Raumwerkzeugs (22) einander gegenüberliegend angeordnete Bürsten (28, 28') vorgesehen sind.

8. Räummaschine nach Anspruch 1, **dadurch gekennzeichnet,**
**daß** mehrere Bürsten (28") mit quer zur Achse (30) des Räumwerkzeugs (22) verlaufenden Achsen (29") vorgesehen sind und
**daß** die Bürsten (28") mit ihrem Umfang den Umfang des Räumwerkzeugs (22) abdecken.

9. Räummaschine nach Anspruch 4, **dadurch gekennzeichnet,**
**daß** die mindestens eine Bürste (28) mittels Zustell-Antrieben (32) in eine Arbeitsposition an dem mindestens einen Räumwerkzeug (22) und aus dieser Arbeitsposition in eine Ruheposition verstellbar ist.

10. Räummaschine nach Anspruch 1, **dadurch gekennzeichnet,**
**daß** die mindestens eine Bürste (28', 28") relativ zur Werkstück-Aufnahme (23) in Richtung der Achse (30) des Räumwerkzeugs (22) ortsfest angeordnet ist.

11. Räummaschine nach einem der Ansprüche 1 bis 10, **dadurch gekennzeichnet,**
**daß** die mindestens eine Bürste (28, 28', 28") elastisch nachgiebig gegen das Räumwerkzeug (22) andrückbar ist.

12. Räummaschine nach Anspruch 11, **dadurch gekennzeichnet,**
**daß** die mindestens eine Bürste (28, 28', 28") mittels mindestens einer Feder (41) quer zur Achse (30) des Räumwerkzeugs (22) gegen dieses andrückbar ist.
